## Europäisches Patentamt
## European Patent Office
## Office européen des brevets

(11) Veröffentlichungsnummer : **0 154 015 B1**

(12) **EUROPÄISCHE PATENTSCHRIFT**

(45) Veröffentlichungstag der Patentschrift : **09.11.88**

(51) Int. Cl.⁴ : **G 07 C 5/10, B 60 K 37/00**

(21) Anmeldenummer : **84115385.1**

(22) Anmeldetag : **13.12.84**

(54) Bedien- und Anzeigeeinrichtung für Informationssysteme in Kraftfahrzeugen.

(30) Priorität : **09.03.84 DE 3408728**

(43) Veröffentlichungstag der Anmeldung :
**11.09.85 Patentblatt 85/37**

(45) Bekanntmachung des Hinweises auf die Patenterteilung : **09.11.88 Patentblatt 88/45**

(84) Benannte Vertragsstaaten :
**DE FR GB IT**

(56) Entgegenhaltungen :
**DE-A- 2 930 832**

(73) Patentinhaber : **Siemens Aktiengesellschaft Berlin und München**
**Wittelsbacherplatz 2**
**D-8000 München 2 (DE)**

(72) Erfinder : **Schlemmer, Torsten, Dipl.-Ing.**
**Dieselstrasse 19**
**D-8000 München 50 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine Weiterentwicklung der im Hauptanspruch-Oberbegriff definierten Einrichtung für ein Fahrzeug, bevorzugt für ein Kraftfahrzeug. Jene Einrichtung ist für sich durch DE-OS 32 11 691 bekannt.

Bei der bekannten Einrichtung kann der mobile Kleinrechner je nach dem momentanen Bedarf in der Ausnehmung der Schalttafel befestigt sein und auch beliebig wieder herausgenommen werden. In der Ausnehmung ist der Kleinrechner über Kontaktelemente mit dem Bordnetz und einem Bordrechner verbunden. Der Kleinrechner wird in der Schalttafel so befestigt, daß dann das gesamte Tastenfeld vertikal liegt und zusammen mit der Anzeigeeinheit stets sichtbar bleibt.

Die bekannte Einrichtung benötigt eine recht große Fläche an der Schalttafel. Die vielen Tasten des Kleinrechners sind überdies zum größten Teil Eingabetasten, die während der Fahrt nicht benötigt werden und zudem unübersichtlich angeordnet sind, weswegen diese Einrichtung im Fahrzeug nicht optimal genutzt werden kann. Vor allem kann sich der Fahrer während der Fahrt beim Bedienen des Kleinrechners nicht immer ausreichend auf das Verkehrsgeschehen konzentrieren.

Der Erfindung liegt die Aufgabe zugrunde, die Einrichtung so weiterzuentwickeln, daß die Anzeigeeinheit und besonders jene Tasten des Kleinrechners, welche die wichtigsten Funktionen steuern, selbst während der Fahrt einfach zu überschauen und zu bedienen sind. Die Lösung soll überdies zulassen, daß der Kleinrechner platzsparend an der Schalttafel bzw. am Armaturenbrett untergebracht werden kann.

Diese Aufgabe wird durch den im Patentanspruch 1 definierten Gegenstand gelöst.

Die Gegenstände mit den in den abhängigen Ansprüchen definierten zusätzlichen Merkmalen gestatten, zusätzliche Vorteile zu erreichen. So gestattet der Gegenstand gemäß Patentanspruch

2, dem Fahrer ein leichteres Erkennen der Anzeigeeinheit und Bedienen der Tasten, die dann unmittelbar in seinem Blickfeld liegen, und

3, eine Bedienung des Kleinrechners auch außerhalb der Schalttafel oder sogar wenn er völlig aus dem Fahrzeug herausgenommen wurde.

Die Erfindung wird anhand eines in den FIGUREN grob schematisch wiedergegebenen Ausführungsbeispiels weiter erläutert. Hierbei zeigt die Fig.

1 einen Längsschnitt durch die Schalttafel eines Fahrzeuges mit einer Ausnehmung und einem beweglich angeordneten Kleinrechner,

2 den in die Ausnehmung voll eingeschobenen Kleinrechner,

3 den auf dem Schlitten aus der Ausnehmung herausgezogenen Kleinrechner und

4 den vom Schlitten abgenommenen Kleinrechner.

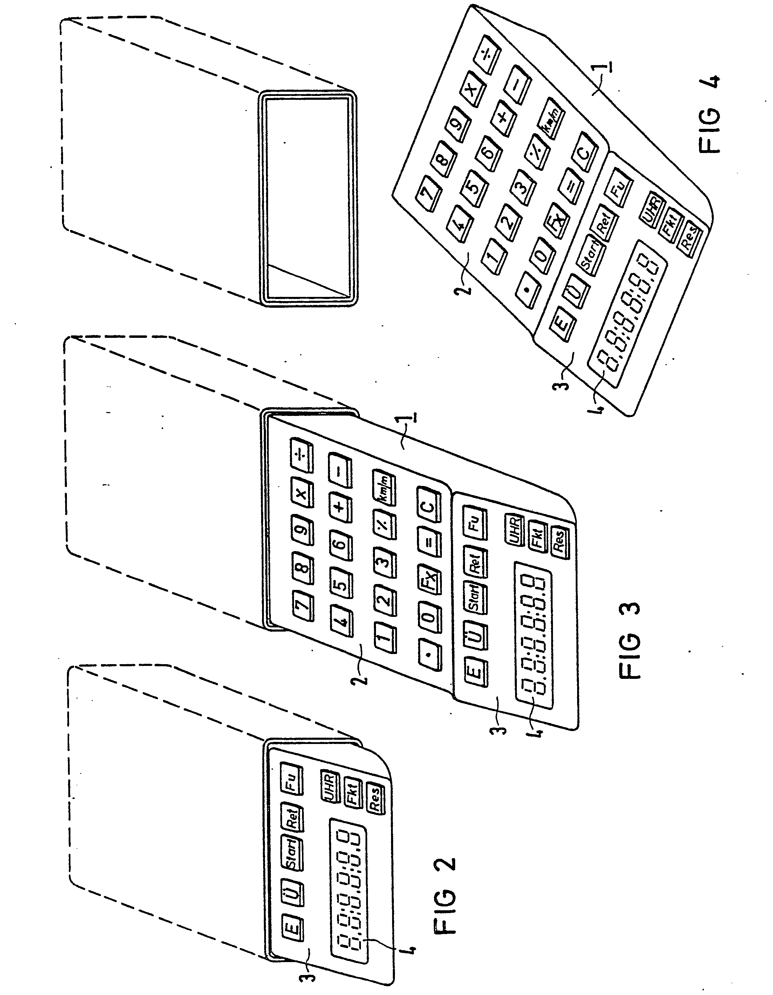

Das gezeigte erfindungsgemäße Beispiel der Einrichtung arbeitet also mit dem Kleinrechner 1 nach Fig. 4. Dieser Kleinrechner 1 hat zwei Tastenfelder, nämlich ein hinteres 2 und ein vorderes 3. Er hat ferner eine Anzeigeeinheit 4 im vorderen Tastenfeld 3. Auf dem hinteren Tastenfeld 2 sind Zifferntasten und solche Funktionstasten angeordnet, die während der Fahrt nicht, oder jedenfalls selten, benutzt werden. Das vordere Tastenfeld 3 ist gegenüber dem hinteren Tastenfeld 2 abgeschrägt angeordnet. Es enthält neben der Anzeigeeinheit 4 solche Funktionstasten, die besonders während der Fahrt zu bedienen sind.

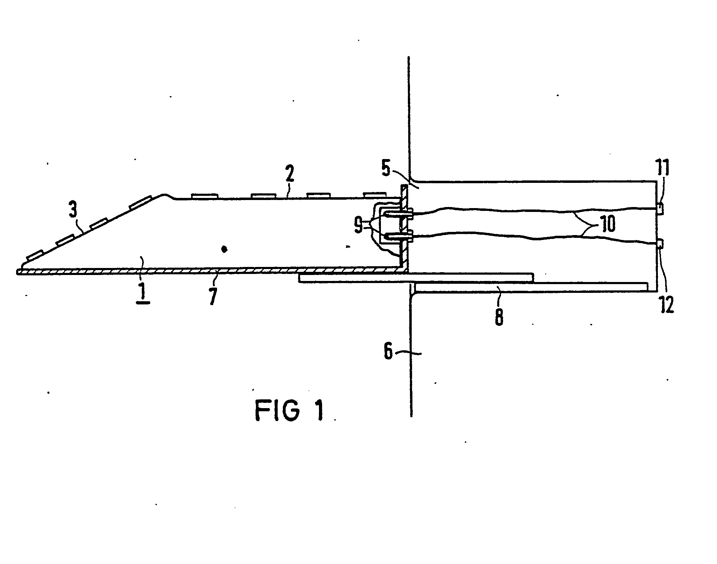

Dieser Kleinrechner 1 kann in eine Ausnehmung 5, vgl. Fig. 1, eingeschoben werden, die sich in der Schalttafel 6 eines Fahrzeuges befindet. Den Kleinrechner 1 nimmt ein an sich bekannter Schlitten 7 auf, der auf Schienen 8 beweglich ist. Dabei wird der Kleinrechner 1 an der Rückwand des Schlittens 7 mit Kontaktelementen 9 verbunden. Die Kontaktelemente 9 stehen mittels flexibler Leitungen 10 zum einen mit einer Anschlußklemme 11 des Bordrechners und zum anderen mit einer Anschlußklemme 12 des Bordnetzes in Verbindung.

In der herausgezogenen Position, vgl. Fig. 1 und 3, bleibt der Kleinrechner 1 mit dem Bordrechner und dem Bordnetz verbunden. Die Tasten des vorderen Tastenfeldes 3, wie auch die des hinteren Tastenfeldes 2, sind zugänglich.

Der Schlitten 7 mit dem Kleinrechner 1 kann auf den Schienen 8 in die Ausnehmung 5, vgl. Fig. 1 und 2, geschoben werden, so daß nur das vordere Tastenfeld 3 mit der Anzeigeeinheit 4 sichtbar bleibt. Der Kleinrechner 1 steht dann weiterhin mit dem Bordrechner und dem Bordnetz in Verbindung. Die während der Fahrt nicht benötigten Tasten auf dem hinteren Tastenfeld 2 sind dann verdeckt und können den Fahrer nicht vom Verkehrsgeschehen ablenken.

Beim gezeigten Beispiel wird also der Kleinrechner 1 horizontal mit nach oben weisenden Tastenfeldern 2 und 3 in die Ausnehmung 5 der Schalttafel 6 eingeschoben. Diese Ausnehmung 5 ist so lang wie das hintere Tastenfeld 2 des Kleinrechners 1. Daher befindet sich das vordere Tastenfeld 3 außerhalb der Ausnehmung 5. Im Bereich des vorderen Tastenfeldes 3 ist die Anzeigeeinheit 4 angeordnet.

Die während der Fahrt zu bedienenden Tasten sind ebenfalls übersichtlich auf dem vorderen Tastenfeld 3 angeordnet. Die Tasten auf dem vorderen Tastenfeld 3 können beispielsweise Funktionen eines Navigationssystems oder andere Bordrechnerfunktionen abrufen.

Das vordere Tastenfeld 3 ist also mit Tasten für die während der Fahrt wichtigsten Grundfunktionen des Kleinrechners 1 bestückt. Daher kann dieser Kleinrechner 1 ohne weiteres die meiste Zeit in der Ausnehmung 7 eingeschoben sein. Man erzielt den Vorteil, daß während der Fahrt nur die Anzeigeeinheit 4 und das vordere Tastenfeld 3 mit den wenigen wichtigsten Tasten sichtbar sind. Ein Bedienungsfehler, wie er bei einem großen Angebot verschiedener Tasten während der Fahrt immer möglich ist, ist daher bei der Erfindung weitgehend ausgeschlossen.

Wenn das vordere Tastenfeld 3 gegenüber dem hinteren Tastenfeld 2 abgeschrägt ist, kann der Fahrer die Anzeigeeinheit 7 und die Tasten, die dann unmittelbar in seinem Blickfeld liegen, leichter erkennen.

Wenn das hintere Tastenfeld 2 betätigt werden soll, kann der Kleinrechner 1, der auf dem Schlitten 7 angeordnet ist, aus der Ausnehmung 5 so weit herausgezogen werden, bis beide Tastenfelder 2 und 3 offen zugänglich sind.

Außerdem ist es möglich, den Kleinrechner 1 vom Schlitten 7 abzunehmen, um ihn als portables Gerät 1 einzusetzen. Er wird dann aus eingebauten Akkumulatoren mit elektrischer Energie versorgt und kann außerhalb des Fahrzeuges, z. B. auch zur Eingabe von Koordinaten für ein Navigationssystem, eingesetzt werden, vgl. Fig. 4. Diese Akkumulatoren können auch über das Bordnetz aufgeladen werden, wodurch die Energieversorgung auch außerhalb des Fahrzeuges sichergestellt ist.

Mit der geschilderten Einschubtechnik wird der Kleinrechner 1 an der Schalttafel 6 an dem Armaturenbrett 6 platzsparend untergebracht.

Der Kleinrechner 1 kann also in drei Positionen benutzt werden :

Bei eingeschobenem Schlitten 7 kann man die Anzeigeeinheit 4 ablesen. Mit dem vorderen Tastenfeld 3 kann man dann auch die Grundfunktionen des Kleinrechners 1 auslösen.

Bei herausgezogenem Schlitten 7 können alle in diesem System möglichen Funktionen ausgelöst werden.

Bei vom Schlitten 7 getrenntem Kleinrechner 1 kann dieser auch außerhalb des Fahrzeuges bedient werden.


**Patentansprüche**

1. Einrichtung zur Aufnahme, Abgabe und Verarbeitung von Daten für den Betrieb von Fahrzeugen, mit
- einem mobilen Kleinrechner (1), der mindestens ein Tastenfeld und eine Anzeigeeinheit (4) aufweist,
- einer Ausnehmung (5) für den Kleinrechner (1) in einer Schalttafel (6), und
- Kontaktelementen (9) für den Kleinrechner (1), die mit einem Bordrechner und dem Bordnetz in Verbindung stehen, dadurch gekennzeichnet, daß
- der Kleinrechner (1) ein vorderes Tastenfeld (3) und ein hinteres Tastenfeld (2) aufweist,
- das vordere Tastenfeld (3) Tasten für die während der Fahrt bevorzugt zu bedienenden Grundfunktionen und das hintere Tastenfeld (2) Tasten für andere Funktionen des Kleinrechners (1) aufweist,
- die Anzeigeeinheit (4) im Bereich des vorderen Tastenfeldes (3) angeordnet ist,
- der Öffnungsquerschnitt der Ausnehmung (5) in der Schalttafel (6) mindestens dem größten Querschnitt senkrecht zur Einschubrichtung des in die Ausnehmung (5) einschiebbaren hinteren Teils des Kleinrechners (1) und die Tiefe der Ausnehmung (5) mindestens der Länge des hinteren Tastenfeldes (2) entspricht,
- bei in die Ausnehmung (5) eingeschobenem Kleinrechner (1) nur das vordere Tastenfeld (3) und die Anzeigeeinheit (4) des Kleinrechners (1), aber nicht das hintere Tastenfeld (2) aus der Öffnung der Ausnehmung (5) in der Schalttafel (6) herausragt,
- bei aus der Ausnehmung (5) herausgezogenem Kleinrechner (1) beide Tastenfelder (2 und 3) und die Anzeigeeinheit (4) des Kleinrechners (1) zugänglich sind, und
- die Kontaktelemente (9) für den Kleinrechner (1) an der Rückwand eines in der Ausnehmung (5) verschiebbaren Schlittens (7), der den Kleinrechner (1) aufnimmt, angeordnet sind und mittels flexibler Leitungen (10) mit mindestens einer Anschlußklemme (11, 12) des Bordrechners und des Bordnetzes in Verbindung stehen.

2. Einrichtung nach Patentanspruch 1, dadurch gekennzeichnet, daß das vordere Tastenfeld (3) gegenüber dem hinteren Tastenfeld (2) auf dem Kleinrechner (1) abgeschrägt angeordnet ist.

3. Einrichtung nach Patentanspruch 1 oder 2, dadurch gekennzeichnet, daß der Kleinrechner (1), zur Energieversorgung außerhalb des Fahrzeuges, Akkumulatoren enthält.


**Claims**

1. A device for the reception, emission, and processing of data for the operation of vehicles comprising :
- a movable mini-computer (1) which comprises at least one keyboard and a display unit (4),
- a recess (5) for the mini-computer (1) in a control panel (6), and
- contact elements (9) for the mini-computer (1) which are connected to an on-board computer and to the on-board power supply network, characterised in that
- the mini-computer (1) comprises a front keyboard (3) and a rear keyboard (2),
- the front keyboard (3) comprises keys for the basic functions which are to be used especially when the vehicle is in motion, and the rear keyboard (2) comprises keys for other functions of the mini-computer (1),
- the display unit (4) is arranged in the region of the front keyboard (3),
- the opening cross-section of the recess (5) in the control panel (6) corresponds to the maximum cross-section at right angles to the insertion direction of the rear part of the mini-computer (1), which can be inserted into the recess (5), and the depth of the recess (5) corresponds at least to the length of the rear keyboard (2),
- when the mini-computer (1) is inserted into the recess (5), only the front keyboard (3) and display unit (4) of the mini-computer (1), but not the rear keyboard (2), project from the opening of the recess (5) in the control panel (6),

- when the mini-computer (1) is extracted from the recess (5), both the keyboards (2 and 3), and the display unit (4) of the mini-computer (1) are accessible, and

- the contact elements (9) for the mini-computer (1) are arranged on the rear wall of a slide (7) which can be inserted into the recess (5) and which accommodates the mini-computer (1) and are connected by means of flexible leads (10) to at least one connection terminal (11, 12) of the on-board computer and the on-board power supply network.

2. A device as claimed in Claim 1, characterised in that the front keyboard (3) is arranged so as to be inclined relative to the rear keyboard (2) of the mini-computer (1).

3. A device as claimed in Claim 1 or 2, characterised in that for energy supply outside of the vehicle, the mini-computer (1) contains accumulators.

**Revendications**

1. Dispositif pour recevoir, délivrer et traiter des données pour le fonctionnement de véhicules, comportant

- un petit ordinateur mobile (1), qui possède au moins un clavier et une unité d'affichage (4),

- un logement (5) prévu pour le petit ordinateur (1) et situé dans un panneau de commande (6), et

- des organes de contact (9) prévus pour le petit ordinateur (1) et reliés à un ordinateur de bord et au réseau de bord, caractérisé par le fait que

- le petit ordinateur (1) comporte un clavier avant (3) et un clavier arrière (2),

- le clavier avant (3) comporte des touches pour les fonctions de base devant être utilisées de préférence pendant le voyage, et le clavier arrière (2) comporte des touches pour d'autres fonctions du petit ordinateur (1),

- l'unité d'affichage (4) est disposée au voisinage du clavier avant (3),

- la section transversale d'ouverture du logement (5) dans le panneau de commande (6) correspond au moins à la section transversale maximale perpendiculairement à la direction d'insertion de la partie arrière, pouvant être insérée dans le logement (5), du petit ordinateur (1) et la profondeur du logement (5) correspond au moins à la longueur du clavier arrière (2),

- lorsque le petit ordinateur (1) est inséré dans le logement (5), seul le clavier avant (3) et l'unité d'affichage (4) du petit ordinateur (1) ressortent de l'ouverture du logement (5) ménagé dans le panneau de commande (6), mais pas le clavier arrière (2),

- lorsque le petit ordinateur (1) est ressorti du logement (5), les deux claviers (2 et 3) et l'unité d'affichage (4) du petit ordinateur (1) sont accessibles, et

- les organes de contact (9) prévus pour le petit ordinateur (1) sont disposés sur la paroi arrière d'un chariot (7), qui est déplaçable dans le logement (5) et loge le petit ordinateur (1), et sont reliés par l'intermédiaire de conducteurs flexibles (10) à au moins une borne de raccordement (11, 12) de l'ordinateur de bord et du réseau de bord.

2. Dispositif selon la revendication 1, caractérisé en ce que le clavier avant (3) est disposé obliquement par rapport au clavier arrière (2) sur le petit ordinateur (1).

3. Dispositif suivant la revendication 1 ou 2, caractérisé par le fait que le petit ordinateur (1) contient des piles pour son alimentation en énergie à l'extérieur du véhicule.

FIG 1

FIG 2

FIG 3

FIG 4

0 154 015